# FASCICULE DE BREVET EUROPEEN

(11) **EP 3 283 531 B1**
(45) Date de publication et mention de la délivrance du brevet: **05.06.2019**
(21) Numéro de dépôt: 16719300.2
(22) Date de dépôt: 14.04.2016
(51) Int. Cl.: C08C 4/00, B01D 11/00, C08L 1/06

(54) **EXTRACTION DE POLYISOPRENE DE MASSE MOLAIRE ÉLEVÉE**
EXTRACTION VON POLYISOPRENE MIT HOHEM MOLEKULARGEWICHT
EXTRACTION OF POLYISOPRENE HAVING HIGH MOLECULAR WEIGHT

(30) Priorité: 15.04.2015 FR 1553343
(43) Date de publication de la demande: 21.02.2018
(73) Titulaire: Association pour les Transferts de Technologies du Mans, 72000 Le Mans (FR); Centre de Cooperation Internationale en Recherche Agronomique pour le Developpement, 75116 Paris (FR)
(72) Inventeur: AMOR, Ali, 94460 Valenton (FR); PALU, Serge, 47120 Pardaillan (FR); PIOCH, Daniel, Auguste, Marie, Paul, 34730 Prades-le-Lez (FR); DORGET, Michel, 72000 Le Mans (FR)
(74) Mandataire: Lavoix
(86) Numéro de dépôt international: PCT/EP2016/058285
(87) Numéro de publication internationale: WO 2016/166251

(56) Documents cités:
- WO-A1-2013/192182
- WO-A1-2013/192217
- US-A1- 2007 276 112

## Description

L'invention concerne un procédé d'extraction de polyisoprène de haute qualité par broyage par cisaillement rotatif au moyen d'un dispositif comprenant au moins un rotor et au moins un stator, de plantes en particules de taille inférieure à 1 mm ou le broyage à un pH supérieur à 3 et inférieur à 8. Ce procédé est mis en oeuvre en phase aqueuse et il permet de préparer une dispersion de polyisoprène dans l'eau dont la masse molaire moyenne en poids (M_{w}) est supérieure à 800 000 g/mol. Le polyisoprène est extrait de plantes et en particulier de guayule (*Parthenium argentatum*)*.* Il s'agit d'un procédé particulièrement respectueux de l'environnement.

Le polyisoprène d'origine naturelle est un matériau utile pour la fabrication d'objets pour lesquels ses propriétés mécaniques sont recherchées.
En particulier, le polyisoprène provenant de plantes différentes de l'hévéa est de plus en plus recherché, en particulier pour remédier aux problèmes d'allergies que rencontrent des utilisateurs d'objets fabriqués à partir de polyisoprène issu d'hévéa.
Le polyisoprène extrait de plantes différentes de l'hévéa, en particulier de guayule, est particulièrement avantageux pour préparer des gants, par exemples des gants médicaux ou chirurgicaux, ou pour préparer des préservatifs. Après coagulation du latex de guayule, le polyisoprène obtenu peut également être utilisé pour produire des objets en caoutchouc, notamment pour produire des pneumatiques.

On connaît des procédés d'extraction de polyisoprène à partir de plantes. De manière générale, ces procédés mettent en oeuvre des solvants organiques.
Pour des raisons de santé et pour des raisons environnementales, l'utilisation de solvants organiques doit être limitée ou bien évitée.
La production de polyisoprène par extraction en phase aqueuse est également particulièrement avantageuse d'un point de vue économique.
On connaît des procédés d'extraction de polyisoprène en phase aqueuse. Toutefois, ces procédés connus ne permettent pas d'aboutir à du polyisoprène de haute qualité, en particulier à du polyisoprène dont la masse molaire moyenne en poids (M_{w}) peut atteindre 2 500 000 g/mol. La demande de brevet US-2012/0063969 décrit un procédé au cours duquel des plants de guayule sont broyés par compression intense. La qualité du polyisoprène extrait peut alors être dégradée. La quantité de polyisoprène extrait à partir d'une quantité particulière de plantes, et dont la qualité et la masse molaire (M_{w}) sont satisfaisantes, est alors réduite.
Par ailleurs, les procédés d'extraction de polyisoprène connus ne permettent pas toujours d'aboutir à du polyisoprène sous la forme d'une dispersion dans l'eau ou sous la forme de latex.
Les procédés d'extraction en phase aqueuse connus sont généralement mis en oeuvre dans des gammes de pH particulières et réduites, généralement strictement supérieures à 7 et en particulier supérieures à 9, 10 ou 11. De tels pH requièrent généralement la présence d'une substance basique pouvant conduire à des problèmes de sécurité ou pouvant entraîner la détérioration du matériel utilisé. Des pollutions environnementales sont également à craindre.

Ainsi, il existe un besoin de disposer de procédés performants d'extraction de polyisoprène de haute qualité. En particulier, il existe un besoin de disposer de procédés d'extraction de polyisoprène de plantes au cours desquels la masse molaire moyenne en poids (M_{w}) du polyisoprène extrait est proche ou identique à la masse molaire moyenne en poids (M_{w}) du polyisoprène au sein de la plante avant extraction ou à l'état naturel. Des rendements de 50 ou 70 %, de 80 à 90 % ou de 100 %, sont particulièrement intéressant lors de l'extraction de polyisoprène dont la masse molaire moyenne en poids (M_{w}) est maintenue proche ou identique de la masse molaire moyenne en poids (M_{w}) au sein de la plante ou à l'état naturel. L'invention fournit un procédé d'extraction de polyisoprène qui permet d'apporter une solution à tout ou partie des problèmes des procédés d'extraction de polyisoprène de l'état de la technique.

Ainsi, l'invention fournit un procédé d'extraction de polyisoprène de masse molaire moyenne en poids (M_{w}) supérieure à 800 000 g/mol, sous la forme d'une dispersion dans l'eau, comprenant
▪ le broyage par cisaillement rotatif au moyen d'un dispositif comprenant au moins un rotor et au moins un stator ou le broyage à un pH supérieur à 3 et inférieur à 8, d'au moins une plante, une partie de plante ou un dérivé de plante choisis parmi guayule (*Parthenium argentatum*), épurge (*Euphorbia lathyris*), arganier (*Argania spinosa*), mariola (*Parthenium incanum*), bigelovie puante (*Chrysothamnus pinifolius*), belle asclépiade (*Asclepias speciosa*), cacalia (*Cacalia atripikifolia*), liane à caoutchouc (*Cryptostegia grandiflora*), pissenlit kazakhe (*Taraxacum koksaghyz*), scorsonère (*Scorzonera sp.*), basilic sauvage (*Pycnanthemum incanum*), canada germandrée (*Teucrieum canadense*) et *Campanula americana,* dans un volume d'eau ou d'une solution aqueuse allant de 1 à 15 L/kg de plante, en particules de taille inférieure à 1 mm ;
▪ la séparation des résidus solides.

Le procédé selon l'invention permet l'extraction de polyisoprène au cours duquel le polyisoprène extrait a une masse molaire moyenne en poids (M_{w}) supérieure à 800 000 g/mol. La masse molaire moyenne en poids (M_{w}) est mesurée par la combinaison de la chromatographie d'exclusion stérique (SEC ou *size exclusion chromatography*) et le couplage de plusieurs détecteurs. De manière préférée, le procédé selon l'invention permet l'extraction de polyisoprène au cours duquel le polyisoprène extrait a une masse molaire moyenne en poids (M_{w}) supérieure à 1 000 000 g/mol ou supérieure à 2 000 000 g/mol ou supérieure à 2 500 000 g/mol.
Selon l'invention, le polyisoprène extrait peut avoir une masse molaire moyenne en poids (M_{w}) allant de 800 000 à 3 000 000 g/mol ou de 800 000 à 2 500 000 g/mol ou de 800 000 à 2 000 000 g/mol.
De manière particulièrement préférée, le polyisoprène extrait a une masse molaire moyenne en poids (M_{w}) allant de 1 000 000 à 3 000 000 g/mol ou de 1 000 000 à 2 500 000 g/mol ou de 1 000 000 à 2 000 000 g/mol.
De manière également particulièrement préférée, le polyisoprène extrait a une masse molaire moyenne en poids (M_{w}) allant de 1 500 000 à 3 000 000 g/mol ou de 1 500 000 à 2 500 000 g/mol ou de 2 000 000 à 2 500 000 g/mol ou de 2 000 000 à 3 000 000 g/mol.

De manière également préférée, grâce au procédé selon l'invention, la masse molaire moyenne en poids (M_{w}) du polyisoprène extrait est de 50 à 100 % de la valeur de la masse molaire moyenne en poids (M_{w}) du polyisoprène dans la plante avant extraction. De manière également préférée, la masse molaire moyenne en poids (M_{w}) du polyisoprène extrait est de 55 à 100 % de la valeur de la masse molaire moyenne en poids (M_{w}) du polyisoprène dans la plante avant extraction. De manière également préférée, la masse molaire moyenne en poids (M_{w}) du polyisoprène extrait est de 60 à 95 % de la valeur de la masse moléculaire du polyisoprène dans la plante avant extraction. De manière également préférée, la masse molaire moyenne en poids (M_{w}) du polyisoprène extrait est de 80 à 90 % de la valeur de la masse molaire moyenne en poids (M_{w}) du polyisoprène dans la plante avant extraction.

Ainsi, le procédé selon l'invention permet de limiter ou d'éviter la dégradation du polyisoprène et donc de limiter la baisse de la masse molaire moyenne en poids (M_{w}) du polyisoprène extrait par rapport à la masse molaire moyenne en poids (M_{w}) du polyisoprène au sein de la plante avant son extraction.
En sélectionnant une fraction particulière de masse molaire moyenne en poids (M_{w}) du polyisoprène extrait selon le procédé de l'invention, il est possible d'obtenir du polyisoprène dont la masse molaire moyenne en poids (M_{w}) de la fraction sélectionnée est supérieure à 100 % de la masse molaire moyenne en poids (M_{w}) du polyisoprène au sein de la plante.

De manière également préférée, grâce au procédé selon l'invention, l'indice de polydispersité du polyisoprène extrait est inférieur à 3, de préférence inférieur à 2 ou inférieur à 1,6. Grâce au procédé selon l'invention, l'indice de polydispersité du polyisoprène extrait peut également aller de 1,6 à 3 ou de 1,6 à 2 ou encore de 1,8 à 3 ou de 1,8 à 3.

Le procédé selon l'invention comprend une étape essentielle de broyage qui peut être un broyage par cisaillement rotatif au moyen d'un dispositif comprenant au moins un rotor et au moins un stator. Le broyage mis en oeuvre selon l'invention peut également être un broyage à un pH supérieur à 3 et inférieur à 8.

Le procédé selon l'invention étant réalisé en phase aqueuse, il se différencie de procédés d'extraction connus réalisés au moyen de solvants organiques. Dans de tels cas, le polyisoprène est dissout dans le solvant organique lors de son extraction de la plante. La phase aqueuse, et en particulier l'eau mise en oeuvre lors du procédé selon l'invention, sert de support à la dispersion de polyisoprène. Elle ne permet pas de dissoudre le polyisoprène.
De manière préférée, le broyage est réalisé dans un volume d'eau ou de solution aqueuse allant de 3 à 7 L/kg ou de 4 à 5 L/kg de plante. De manière également préférée, le broyage est réalisé dans un volume allant de 3 à 7 L/kg de plante ou de 4 à 5 L/kg de plante d'une solution aqueuse comprenant un agent antioxydant, par exemple le sulfite de sodium ou le bisulfite de sodium.

Lors du broyage par cisaillement rotatif au moyen d'un dispositif comprenant au moins un rotor et au moins un stator, le procédé selon l'invention met avantageusement en oeuvre un broyeur comprenant un rotor et un stator, par exemple un broyeur de type Sylverson, notamment un broyeur Sylverson L4RT, ou encore un broyeur de type Fryma Koruma, notamment un broyeur Fryma Koruma MZ 50/A ou un broyeur Fryma Koruma ML. D'autres types de broyeur comprenant un rotor et un stator permettant le cisaillement, et de préférence le cisaillement rotatif, peuvent convenir. Ainsi, la composante mécanique du broyage selon l'invention nécessite un cisaillement de la plante à traiter. Lors de la mise en oeuvre du procédé selon l'invention, la composante de cisaillement doit être majoritaire. Lors de la mise en oeuvre de ce cisaillement, la plante est cisaillée, coupée, découpée ou hachée sans subir de déformation ou d'écrasement excessifs. Une composante de flexion peut également intervenir mais elle ne doit pas induire de tels déformation ou écrasement excessifs.
Pour le procédé selon l'invention, lors du broyage à un pH supérieur à 3 et inférieur à 8, le broyage peut être réalisé par cisaillement simple ou par cisaillement avec flexion.
De manière préférée, lors du broyage par cisaillement rotatif au moyen d'un dispositif comprenant au moins un rotor et au moins un stator, le broyage est réalisé et à un pH supérieur à 3 et inférieur à 11. De manière particulièrement préférée, le broyage est réalisé par cisaillement rotatif au moyen d'un dispositif comprenant au moins un rotor et au moins un stator et à un pH supérieur à 3 et inférieur à 8. Un pH supérieur à 3 et inférieur à 7,8 peut convenir, de même qu'un pH supérieur à 3 et inférieur à 7,5 ou encore un pH supérieur à 3 et inférieur à 7, un pH supérieur à 4 et inférieur à 7,8, un pH supérieur à 4 et inférieur à 7,5 ou un pH supérieur à 4 et inférieur à 7.

Le procédé selon l'invention comprend le broyage d'au moins une plante, une partie de plante ou un dérivé de plante en particules de taille inférieure à 1 mm. De manière préférée, le broyage peut conduire à des particules de taille inférieure à 500 µm. De manière plus préférée, les particules ont une taille inférieure à 250 µm, voire inférieure à 150 µm.

De manière également préférée, au moins une étape du procédé selon l'invention est réalisée en présence d'au moins un agent choisi parmi un agent d'extraction du polyisoprène, un agent de stabilisation du polyisoprène, un agent de concentration du polyisoprène.
Comme agent d'extraction du polyisoprène ou comme agent de stabilisation du polyisoprène, on préfère utiliser un agent tensioactif, un agent antioxydant ou un agent de contrôle du pH.

Comme agents de stabilisation du polyisoprène, on peut notamment citer sulfite de sodium, bisulfite de sodium, dérivé phénolique, dodécylsulfate de sodium (SDS), bromure de triméthyl tetradécylammonium (TTAB), acide aminé N-alkylé, alcool isotridécylique à 15 OE, acide, base. Comme agent de concentration du polyisoprène, on préfère utiliser un agent de crémage, par exemple un alginate d'ammonium ou une carboxyméthyl-cellulose. L'agent de crémage mis en oeuvre peut être utilisé en une faible concentration dans le milieu, par exemple une concentration allant de 0,05 à 0,1 % en poids.
De manière également préférée, le broyage peut être réalisé en présence d'au moins un agent tensioactif. De nombreux types d'agents tensioactifs peuvent convenir, notamment un agent tensioactif non-ionique ou un agent tensioactif ionique, par exemple un agent tensioactif cationique ou un agent tensioactif zwiterionique. Comme exemples d'agents tensioactifs, on peut citer dodécylsulfate de sodium (SDS), bromure de triméthyl tetradécylammonium (TTAB), ester de sorbitol polyéthylene, acide aminé N-alkylé.

Pour le procédé selon l'invention, les étapes de broyage et de séparation peuvent être répétées au moins une fois. Le procédé selon l'invention comprend alors au moins ces deux étapes supplémentaires de broyage et de séparation.

Le procédé selon l'invention peut également comprendre une étape préalable de prétraitement de la plante récoltée.

De manière préférée, le procédé selon l'invention permet d'extraire du polyisoprène d'au moins une plante, une partie de plante ou un dérivé de plante de plante choisis parmi guayule (*Parthenium argentatum*), épurge (*Euphorbia lathyris*), arganier (*Argania spinosa*), mariola (*Parthenium incanum*), bigelovie puante (*Chrysothamnus pinifolius*), belle asclépiade (*Asclepias speciosa*), cacalia (*Cacalia atripikifolia*), liane à caoutchouc (*Cryptostegia grandiflora*), pissenlit kazakhe (*Taraxacum koksaghyz*), scorsonère (*Scorzonera sp*.), basilic sauvage (*Pycnanthemum incanum*), canada germandrée *(Teucrieum canadense)* et *Campanula americana.* De manière particulièrement préférée, le procédé selon l'invention est mis en oeuvre pour extraire du polyisoprène à partir de guayule (*Parthenium argentatum).*

Le procédé selon l'invention peut être mis en oeuvre pour extraire du polyisoprène d'une plante, d'une partie de plante ou d'un dérivé de plante qui peuvent éventuellement être prétraités préalablement. De manière avantageuse, le procédé selon l'invention peut être mis en oeuvre sur la plante entière, sur les racines ou sur les branches et feuilles de la plante. De manière préférée, le procédé selon l'invention est mis en oeuvre sur les seules branches et feuilles de la plante ou sur les seules feuilles ou encore sur les seules racines de la plante. Le procédé selon l'invention peut également être mis en oeuvre uniquement sur la biomasse ligneuse de la plante ou sur le bois ou sur l'écorce de la plante. La biomasse ligneuse de la plante est généralement issue des branches de la plante desquelles l'écorce a été supprimée. Le procédé selon l'invention peut également être mis en oeuvre uniquement sur les fruits de la plante.

De manière préférée pour le procédé selon l'invention, le broyage est réalisé à une température inférieure à 60 °C et plus préférentiellement à une température inférieure à 50 °C ou inférieure à 40 °C.

Avant le broyage, le procédé selon l'invention peut comprendre le découpage préalable de la plante, en morceaux de taille allant de 0,5 à 100 mm ou 60 mm, de préférence allant de 0,5 à 50 mm ou de 1 à 30 mm. Le découpage préalable de la plante en morceaux est réalisé en milieu humide, en solution aqueuse ou dans l'eau. De manière préférée, Le découpage préalable de la plante en morceaux est réalisé moins de 6 h après récolte de la plante. De manière plus préférée, le découpage préalable est réalisé en milieu humide, en solution aqueuse ou dans l'eau, et les morceaux de plante découpés ont une taille allant de 0,5 à 50 mm, de préférence de 1 à 30 mm, et ils sont stockés, en milieu humide, en solution aqueuse ou dans l'eau.

Pour le procédé selon l'invention, le broyage peut être réalisé plus ou moins rapidement après la récolte de la plante, en particulier la récolte du guayule. La plante récoltée peut par exemple être stockée avant la mise en oeuvre du procédé selon l'invention. Les conditions du stockage peuvent être adaptées, en particulier selon la durée avant broyage ou encore selon la température de stockage. De manière avantageuse, le broyage est réalisé moins de 6 mois après récolte ou moins de 2 mois après récolte. De manière préférée, le broyage est réalisé moins d'une semaine après récolte, plus préférentiellement moins d'un jour après récolte et encore plus préférentiellement moins de 6 h après récolte.
Pour le procédé selon l'invention, le broyage peut également être réalisé après trempage de la plante après récolte. De manière avantageuse, le trempage de la plante récoltée peut être réalisé dans une solution aqueuse comprenant au moins un agent choisi parmi un agent d'extraction du polyisoprène, un agent de stabilisation du polyisoprène, un agent de concentration du polyisoprène.

Le procédé selon l'invention permet d'extraire du polyisoprène de la plante sous la forme d'une dispersion de polyisoprène dans l'eau. De manière préférée, la dispersion de polyisoprène dans l'eau obtenue comprend de 5 à 65 % en masse de polyisoprène sec (DRC ou *dry rubber content* ou teneur en caoutchouc sec) ou de 10 à 65 % en masse de polyisoprène sec. De manière plus préférée, la dispersion de polyisoprène dans l'eau obtenue comprend de 15 à 65 % ou de 25 à 65 % en masse de polyisoprène sec. De manière encore plus préférée, la dispersion de polyisoprène dans l'eau obtenue comprend de de 30 à 65% ou de 35 à 65 % en masse de polyisoprène sec.

Le procédé selon l'invention permet d'extraire du polyisoprène de la plante de manière particulièrement efficace. De manière avantageuse pour le procédé selon l'invention, le rendement d'extraction de polyisoprène de masse molaire moyenne en poids (M_{w}) supérieure à 800 000 g/mol est supérieur à 50 % en masse de polyisoprène de la plante après récolte. De manière préférée, le rendement d'extraction de polyisoprène de masse molaire moyenne en poids (M_{w}) supérieure à 800 000 g/mol est supérieur à 60 % ou supérieur à 70 % en masse de polyisoprène de la plante après récolte.

Le procédé selon l'invention comprend le broyage de la plante puis la séparation des résidus solides. La séparation des résidus solides peut être réalisée par filtration, par exemple réalisée au moyen d'au moins un tamis. Un tamis de 100 µm peut convenir.

Le procédé selon l'invention comprend le broyage de la plante puis la séparation des résidus solides. Il peut également comprendre la concentration de la dispersion de polyisoprène dans l'eau. La concentration est effectuée par élimination de l'eau. Cette élimination de l'eau peut aller de 30 à 99,9 % du volume d'eau ou être une élimination quasi-totale. De manière avantageuse, la concentration peut être réalisée par centrifugation mécanique. Elle peut également être réalisée par centrifugation mécanique combinée à un crémage. Elle peut encore être réalisée par centrifugation mécanique en présence d'au moins un agent de crémage.
Outre la concentration de la dispersion de polyisoprène dans l'eau (latex), le procédé selon l'invention peut également comprendre la stabilisation du polyisoprène sous la forme d'une telle dispersion dans l'eau.

Outre le broyage de la plante puis la séparation des résidus solides, le procédé selon l'invention peut également comprendre la coagulation du polyisoprène et la séparation du caoutchouc. De manière avantageuse, la coagulation du polyisoprène est réalisée par un traitement acide. De manière préférée, la coagulation du polyisoprène est réalisée en présence d'au moins un agent antioxydant.

Les différents aspects et les propriétés avantageuses de l'invention peuvent être illustrés par les exemples qui suivent. Ces exemples ne constituent pas de limitation de la portée de cette invention.

### Exemple 1 : extraction de polyisoprène de plants de guayule (Parthenium araentatum) au moyen de différents broyeurs

Des plants de guayule ont été récoltés afin d'en extraire du polyisoprène selon le procédé de l'invention. La récolte a été réalisée par fauchage des plants de guayule deux ans après plantation. Après récolte, les feuilles et les inflorescences des plants de guayule ont été séparées. La biomasse ainsi préparée a été traitée selon le procédé de l'invention. Des mesures de la masse molaire moyenne en poids (M_{w}) et du taux d'extraction ont été réalisées sur le polyisoprène extrait. Des mesures comparatives par rapport à ces mêmes variables ont été effectuées pour le polyisoprène présent au sein de la plante avant extraction selon le procédé de l'invention.
Le taux d'extraction du polyisoprène (% en poids) est le rapport de la masse du polyisoprène extrait puis séché et coagulé avec un acide, récupéré après deux étapes d'extraction successives, à la masse de polyisoprène présent dans l'échantillon de biomasse utilisé pour l'essai d'extraction, multiplié par 100. Chaque essai d'extraction et chaque valeur mesurée sont la moyenne de trois essais, avec un écart-type inférieur à 10 % en valeur relative.

Plusieurs échantillons de biomasse ont été traités. Des échantillons ont été préparés à partir de 100 g de biomasse de guayule mélangés à 500 mL d'une phase aqueuse. D'autres échantillons ont été préparés à partir de 10 kg de biomasse de guayule mélangés à 40 L d'une phase aqueuse.
Les différents échantillons sont traités par broyage puis séparation des résidus solides par filtration. Un broyeur A équipé d'un rotor et d'un stator (broyeur Silverson L4RT) et un broyeur B équipé de couteaux (broyeur Fryma Koruma MZ ou ML) ont été utilisés. Les particules obtenues après broyage ont une taille inférieure à 150 µm. Les résultats obtenus sont présentés dans le tableau 1.

**Tableau 1**

| essai | broyeur | masse molaire moyenne en poids (M_{w}) du polyisoprène extrait (g/mol) | taux d'extraction du polyisoprène (%) |
|---|---|---|---|
| 1 | A | 2 700 000 | 72 |
| 2 | B | 2 600 000 | 70 |
| 3 | B | 2 800 000 | 87 |

Le procédé selon l'invention permet donc d'extraire du polyisoprène dont la masse molaire moyenne en poids (M_{w}) est bien supérieure à 1 000 000 g/mol ou 1 500 000 g/mol et même supérieure à 2 000 000 g/mol.

### Exemple 2 : extraction de polyisoprène de plants de guayule (Parthenium argentatum) en fonction du pH

La biomasse préparée selon l'exemple 1 est utilisée pour évaluer l'influence du pH lors de l'extraction du polyisoprène au moyen du broyeur A. La variation de pH de 3 à 10 est obtenue en ajoutant de l'acide chlorhydrique ou de l'ammoniaque à la phase aqueuse lors du broyage. Les résultats obtenus sont présentés dans le tableau 2. Ils sont obtenus en fonction du pH initial de la phase aqueuse utilisée pour l'extraction.

**Tableau 2**

| pH | masse molaire moyenne en poids (M_{w}) du polyisoprène extrait (g/mol) | taux d'extraction du polyisoprène (%) |
|---|---|---|
| 3 | 1 900 000 | 25 |
| 4 | 2 300 000 | 64 |
| 5 | 2 100 000 | 73 |
| 6 | 2 400 000 | 72 |
| 7 | 2 500 000 | 70 |
| 8 | 2 500 000 | 72 |
| 11 | 2 200 000 | 67 |

Le procédé selon l'invention permet d'extraire du polyisoprène de masse molaire moyenne en poids (M_{w}) élevée, y compris à pH neutre ou acide, permettant ainsi de s'affranchir de l'addition d'une base.

### Exemple 3 : extraction de polyisoprène de plants de guayule (Parthenium argentatum) en présence d'un agent tensioactif

La biomasse préparée selon l'exemple 1 est utilisée pour évaluer l'influence d'un agent tensioactif non-ionique (ester de polyéthylène sorbitol - produit Tween 80) présent en faible concentration (0,01 % en poids) dans la phase aqueuse lors du broyage. Les résultats obtenus sont présentés dans le tableau 3.

**Tableau 3**

| essai | masse molaire moyenne en poids (M_{w}) du polyisoprène extrait (g/mol) | taux d'extraction du polyisoprène (%) |
|---|---|---|
| sans agent tensio-actif | 2 000 000 | 60 |
| avec agent tensio-actif | 2 000 000 | 74 |

On constate que la masse molaire moyenne du polyisoprène est identique à celle mesurée en l'absence d'agent tensioactif ajouté. Toutefois, le taux d'extraction du polyisoprène obtenu en présence de l'agent tensioactif non-ionique en faible concentration est bien supérieur. La présence de l'agent tensioactif permet donc d'accroitre les performances du procédé d'extraction selon l'invention sans exercer d'effet négatif sur la qualité du polyisoprène extrait.

## Revendications

1. Procédé d'extraction de polyisoprène de masse molaire moyenne en poids (M_{w}) supérieure à 800 000 g/mol, sous la forme d'une dispersion dans l'eau, comprenant
▪ le broyage par cisaillement rotatif au moyen d'un dispositif comprenant au moins un rotor et au moins un stator ou le broyage à un pH supérieur à 3 et inférieur à 8, d'au moins une plante, une partie de plante ou un dérivé de plante choisis parmi guayule (*Parthenium argentatum*), épurge (*Euphorbia lathyris*), arganier (*Argania spinosa*), mariola (*Parthenium incanum*), bigelovie puante (*Chrysothamnus pinifolius*)*,* belle asclépiade (*Asclepias speciosa*), cacalia (*Cacalia atripikifolia*), liane à caoutchouc (*Cryptostegia grandiflora),* pissenlit kazakhe (*Taraxacum koksaghyz*), scorsonère (*Scorzonera sp.*), basilic sauvage (*Pycnanthemum incanum*), canada germandrée (*Teucrieum canadense*) et *Campanula americana,* dans un volume d'eau ou d'une solution aqueuse allant de 1 à 15 L/kg de plante, en particules de taille inférieure à 1 mm ;
▪ la séparation des résidus solides.

2. Procédé selon la revendication 1 pour lequel le broyage est réalisé à un pH supérieur à 3 et inférieur à 8 et par cisaillement simple ou par cisaillement avec flexion.

3. Procédé selon la revendication 1 pour lequel le broyage est réalisé à un pH supérieur à 3 et inférieur à 11 ou à un pH supérieur à 3 et inférieur à 8 et par cisaillement rotatif au moyen d'un dispositif comprenant au moins un rotor et au moins un stator.

4. Procédé selon l'une quelconque des revendications 1 à 3 comprenant ultérieurement
• la concentration de la dispersion de polyisoprène dans l'eau (latex) et la stabilisation du polyisoprène sous la forme d'une dispersion dans l'eau ; ou
• la coagulation du polyisoprène et la séparation du caoutchouc.

5. Procédé selon l'une quelconque des revendications 1 à 4
• dont le broyage conduit à des particules de taille inférieure à 500 µm, de préférence inférieure à 250 µm, plus préférentiellement inférieure à 150 µm ; ou
• dont au moins une étape est réalisée en présence d'au moins un agent choisi parmi un agent d'extraction du polyisoprène, un agent de stabilisation du polyisoprène, un agent de concentration du polyisoprène ; ou
• comprenant au moins deux étapes supplémentaires de broyage et de séparation ; ou
• comprenant une étape préalable de prétraitement de la plante récoltée.

6. Procédé selon l'une quelconque des revendications 1 à 5 pour lequel
▪ la plante est le guayule *(Parthenium argentatum)* ; ou
▪ la plante entière est utilisée ; ou
▪ la plante est prétraitée préalablement ; ou
▪ seules les racines, les branches et les feuilles de la plante sont utilisées ; ou
▪ seules les branches et les feuilles de la plante sont utilisées ; ou
▪ seules les branches de la plante sont utilisées ; ou
▪ seules les feuilles de la plante sont utilisées ; ou
▪ seules les racines de la plante sont utilisées ; ou
▪ seuls les fruits de la plante sont utilisés ; ou
▪ seule la biomasse ligneuse de la plante est utilisée ; ou
▪ seul le bois de la plante est utilisé ; ou
▪ seule l'écorce de la plante est utilisée.

7. Procédé selon l'une quelconque des revendications 1 à 6 pour lequel le polyisoprène extrait a une masse molaire moyenne en poids (M_{w}) supérieure à 1 000 000 g/mol ou supérieure à 2 000 000 g/mol ou supérieure à 2 500 000 g/mol ; de préférence allant de 800 000 à 3 000 000 g/mol ou de 800 000 à 2 500 000 g/mol ou de 800 000 à 2 000 000 g/mol ou de 1 000 000 à 3 000 000 g/mol ou de 1 000 000 à 2 500 000 g/mol ou de 1 000 000 à 2 000 000 g/mol ou de 1 500 000 à 3 000 000 g/mol ou de 1 500 000 à 2 500 000 g/mol ou de 2 000 000 à 2 500 000 g/mol ou de 2 000 000 à 3 000 000 g/mol.

8. Procédé selon l'une quelconque des revendications 1 à 7 pour lequel la masse molaire moyenne en poids (M_{w}) du polyisoprène extrait est de 50 à 100 %, de préférence de 55 à 100%, de préférence de 60 à 95%, et encore plus préférentiellement de 80 à 90% de la valeur de la masse molaire moyenne en poids (M_{w}) du polyisoprène dans la plante avant extraction.

9. Procédé selon l'une quelconque des revendications 1 à 8 pour lequel l'indice de polydispersité du polyisoprène extrait est inférieur à 3, de préférence inférieur à 2 ou inférieur à 1,6 ou l'indice de polydispersité du polyisoprène extrait va de 1,6 à 3 ou de 1,6 à 2 ou encore de 1,8 à 3 ou de 1,8 à 3.

10. Procédé selon l'une quelconque des revendications 1 à 9 pour lequel la dispersion de polyisoprène dans l'eau obtenue comprend de 5 à 65 %, de préférence de 10 à 65%, de préférence de 15 à 65%, de préférence de 25 à 65 %, de préférence de 30 à 65%, encore plus préférentiellement de 35 à 65% en masse de polyisoprène sec (DRC ou dry rubber content).

11. Procédé selon l'une quelconque des revendications 1 à 10 pour lequel le rendement d'extraction de polyisoprène de masse molaire moyenne en poids (M_{w}) supérieure à 800 000 g/mol est supérieur à 50 %, de préférence supérieur à 60%, encore plus préférentiellement supérieur à 70% en masse de polyisoprène de la plante après récolte.

12. Procédé selon l'une quelconque des revendications 1 à 11 pour lequel
• le broyage est réalisé moins de 6 mois après récolte, de préférence moins de 2 mois après récolte, plus préférentiellement moins d'une semaine après récolte, encore plus préférentiellement moins d'un jour ou moins de 6 h après récolte ; ou
• le broyage est réalisé à un pH supérieur à 3 et inférieur à 7,8 ou à un pH supérieur à 3 et inférieur à 7,5 ou à un pH supérieur à 3 et inférieur à 7 ou à un pH supérieur à 4 et inférieur à 7,8 ou à un pH supérieur à 4 et inférieur à 7,5 ou à un pH supérieur à 4 et inférieur à 7 ; ou
• le broyage est réalisé à une température inférieure à 60 °C, de préférence inférieure à 50 °C, plus préférentiellement à une température inférieure à 40 °C ; ou
• le broyage est réalisé après trempage de la plante, après récolte, dans une solution aqueuse comprenant au moins un agent choisi parmi un agent d'extraction du polyisoprène, un agent de stabilisation du polyisoprène, un agent de concentration du polyisoprène ; ou
• la séparation est une filtration, par exemple réalisée au moyen d'au moins un tamis, par exemple un tamis de 100 µm ;
• la concentration est réalisée par centrifugation mécanique ; ou
• la concentration est réalisée par crémage ; ou
• la concentration est réalisée par centrifugation mécanique combinée à un crémage ou par centrifugation mécanique en présence d'au moins un agent de crémage.

13. Procédé selon l'une des revendications 1 à 12 pour lequel le broyage est réalisé
• dans un volume d'eau ou de solution aqueuse allant de 3 à 7 L/kg ou de 4 à 5 L/kg de plante ; ou
• dans un volume d'une solution aqueuse comprenant un agent antioxydant, par exemple le sulfite de sodium ou le bisulfite de sodium, allant de 3 à 7 L/kg ou de 4 à 5 L/kg de plante.

14. Procédé selon l'une des revendications 1 à 13 pour lequel le broyage est réalisé en présence d'au moins un agent tensioactif choisi parmi
▪ un agent tensioactif anionique, par exemple le dodécylsulfate de sodium (SDS) ;
▪ un agent tensioactif cationique, par exemple le bromure de triméthyl tetradécylammonium (TTAB) ;
▪ un agent tensioactif non-ionique, par exemple un ester de sorbitol polyéthylene ;
▪ un agent tensioactif zwiterionique par exemple un acide aminé N-alkylé.

15. Procédé selon l'une des revendications 1 à 14 comprenant également
▪ le découpage préalable, en milieu humide, en solution aqueuse ou dans l'eau, de la plante, en morceaux de taille allant de 0,5 à 100 mm ou 60 mm, de préférence allant de 0,5 à 50 mm ou de 1 à 30 mm ; ou
▪ le découpage préalable, en milieu humide, en solution aqueuse ou dans l'eau, de la plante en morceaux de taille allant de 0,5 à 50 mm, de préférence de 1 à 30 mm, puis le stockage, en milieu humide, en solution aqueuse ou dans l'eau, des morceaux de plante.

## Patentansprüche

1. Verfahren zur Extraktion von Polyisopren mit einer gewichtsmittleren Molmasse (Mw) von größer als 800 000 g/mol, in Form einer Dispersion in Wasser, umfassend:
▪ Mahlen mittels Rotationsscherung unter Verwendung einer Vorrichtung umfassend mindestens einen Rotor und mindestens einen Stator, oder Mahlen bei einem pH höher als 3 und niedriger als 8 mindestens einer Pflanze, eines Teils einer Pflanze oder eines Pflanzenderivats ausgewählt aus Guayule (*Parthenium argentatum*), Kreuzblättrige Wolfsmilch (*Euphorbia lathyris*), Arganie (*Argania spinosa*), Mariola (*Parthenium incanum*), stinkender Bigelow (*Chrysothamnus pinifolius*), schöne Seidenpflanze (*Asclepias speciosa*)*,* Cacalia (*Cacalia atripikifolia*), Indischer Gummiwein (*Cryptostegia grandiflora*), Russischer Löwenzahn (*taraxacum koksaghyz*), Scorzonera (*Scorzonera sp.*), Wildes Basilikum (*Pycnanthemum incanum*), Kanadischer Germander (*Teucrieum canadense*) und *Campanula americana* in einem Volumen Wasser oder wässriger Lösung von 1 bis 15 L/kg Pflanze in Partikel mit einer Größe von weniger als 1 mm;
▪ Trennen von festen Rückständen.

2. Verfahren gemäß Anspruch 1, wobei das Mahlen bei einem pH höher als 3 und niedriger als 8 und durch einfache Scherung oder Biegescherung durchgeführt wird.

3. Verfahren gemäß Anspruch 1, wobei das Mahlen bei einem pH höher als 3 und niedriger als 11 oder bei einem pH höher als 3 und niedriger als 8 und durch Rotationsscherung unter Verwendung einer Vorrichtung umfassend mindestens einen Rotor und mindestens einen Stator durchgeführt wird.

4. Verfahren gemäß einem der Ansprüche 1 bis 3, umfassend anschließend
▪ das Konzentrieren der Dispersion von Polyisopren in Wasser (Latex) und das Stabilisieren des Polyisoprens in Form einer Dispersion in Wasser; oder
▪ das Koagulieren des Polyisoprens und das Abtrennen des Kautschuks.

5. Verfahren gemäß einem der Ansprüche 1 bis 4
▪ wobei das Mahlen zu Teilchen mit einer Größe von weniger als 500 µm, vorzugsweise weniger als 250 µm, noch bevorzugter weniger als 150 µm führt; oder
▪ wobei mindestens ein Schritt in Anwesenheit mindestens eines Mittels ausgewählt aus einem Mittel zur Extraktion von Polyisopren, einem Mittel zur Stabilisierung von Polyisopren, einem Mittel zur Konzentrierung von Polyisopren durchgeführt wird; oder
▪ umfassend mindestens zwei zusätzliche Schritte des Mahlens und der Trennung; oder
▪ umfassend einen vorherigen Schritt der Vorbehandlung der geernteten Pflanze.

6. Verfahren gemäß einem der Ansprüche 1 bis 5, wobei
▪ die Pflanze Guayule (*Parthenium argentatum*) ist; oder
▪ die ganze Pflanze verwendet wird; oder
▪ die Pflanze vorab vorbehandelt ist; oder
▪ nur die Wurzeln, die Zweige und die Blätter der Pflanze verwendet werden; oder
▪ nur die Zweige und die Blätter der Pflanze verwendet werden; oder
▪ nur die Zweige der Pflanze verwendet werden; oder
▪ nur die Blätter der Pflanze verwendet werden; oder
▪ nur die Wurzeln der Pflanze verwendet werden; oder
▪ nur die Früchte der Pflanze verwendet werden; oder
▪ nur die holzige Biomasse der Pflanze verwendet wird; oder
▪ nur das Holz der Pflanze verwendet wird; oder
▪ nur die Rinde der Pflanze verwendet wird.

7. Verfahren gemäß einem der Ansprüche 1 bis 6, wobei das Polyisopren-Extrakt eine gewichtsmittlere Molmasse (Mw) von größer als 1 000 000 g/mol oder größer als 2 000 000 g/mol oder größer als 2 500 000 g/mol; vorzugsweise von 800 000 bis 3 000 000 g/mol oder von 800 000 bis 2 500 000 g/mol oder von 800 000 bis 2 000 000 g/mol oder von 1 000 000 bis 3 000 000 g/mol oder von 1 000 000 bis 2 500 000 g/mol oder von 1 000 000 bis 2 000 000 g/mol oder von 1 500 000 bis 3 000 000 g/mol oder von 1 500 000 bis 2 500 000 g/mol oder von 2 000 000 bis 2 500 000 g/mol oder von 2 000 000 bis 3 000 000 g/mol hat.

8. Verfahren gemäß einem der Ansprüche 1 bis 7, wobei die gewichtsmittlere Molmasse (Mw) des Polyisopren-Extrakts 50 bis 100 %, vorzugsweise 55 bis 100 %, vorzugsweise 60 bis 95 %, und noch bevorzugter 80 bis 90 % des Wertes der gewichtsmittleren Molmasse (Mw) des Polyisoprens in der Pflanze vor der Extraktion beträgt.

9. Verfahren gemäß einem der Ansprüche 1 bis 8, wobei der Polydispersitätsindex des Polyisopren-Extraktes kleiner als 3, vorzugsweise kleiner als 2 oder kleiner als 1,6 ist oder der Polydispersitätsindex des Polyisopren-Extraktes reicht von 1,6 bis 3 oder von 1,6 bis 2 oder sogar von 1,8 bis 3 oder von 1,8 bis 3.

10. Verfahren gemäß einem der Ansprüche 1 bis 9, wobei die erhaltene Dispersion von Polyisopren in Wasser 5 bis 65 Gew.-%, vorzugsweise 10 bis 65 Gew.-%, vorzugsweise 15 bis 65 Gew.-%, vorzugsweise 25 bis 65 Gew.-%, vorzugsweise 30 bis 65 Gew.-%, noch bevorzugter 35 bis 65 Gew.-% trockenes Polyisopren (DRC oder dry rubber content) umfasst.

11. Verfahren gemäß einem der Ansprüche 1 bis 10, wobei die Ausbeute der Extraktion des Polyisoprens mit einer gewichtsmittleren Molmasse (Mw) von größer als 800 000 g/mol mehr als 50 Gew.-%, vorzugsweise mehr als 60 Gew.-%, noch bevorzugter mehr als 70 Gew.-% des Polyisoprens der Pflanze nach der Ernte beträgt.

12. Verfahren gemäß einem der Ansprüche 1 bis 11, wobei
▪ das Mahlen mindestens 6 Monate nach der Ernte, vorzugsweise mindestens 2 Monate nach der Ernte, bevorzugter mindestens eine Woche nach der Ernte, noch bevorzugter mindestens einen Tag oder mindestens 6 h nach der Ernte durchgeführt wird; oder
▪ das Mahlen bei einem pH größer als 3 und kleiner als 7,8 oder bei einem pH größer als 3 und kleiner als 7,5 oder bei einem pH größer als 3 und kleiner als 7 oder bei einem pH größer als 4 und kleiner als 7,8 oder bei einem pH größer als 4 und kleiner als 7,5 oder bei einem pH größer als 4 und kleiner als 7 durchgeführt wird; oder
▪ das Mahlen bei einer Temperatur kleiner als 60 °C, vorzugsweise kleiner als 50 °C, bevorzugter bei einer Temperatur kleiner als 40 °C durchgeführt wird; oder
▪ das Mahlen nach Einweichen der Pflanze, nach der Ernte, in einer wässrigen Lösung umfassend mindestens ein Mittel ausgewählt aus einem Mittel zur Extraktion von Polyisopren, einem Mittel zur Stabilisierung von Polyisopren, einem Mittel zur Konzentrierung von Polyisopren durchgeführt wird; oder
▪ die Trennung eine Filtration ist, beispielsweise durchgeführt unter Verwendung mindestens eines Siebs, beispielsweise eines 100 µm Siebs;
▪ das Konzentrieren mittels mechanischer Zentrifugation durchgeführt; oder
▪ das Konzentrieren mittels Eindickens durchgeführt wird; oder
▪ das Konzentrieren mittels mechanischer Zentrifugation kombiniert mit Eindicken oder mittels mechanischer Zentrifugation in Anwesenheit mindestens eines Mittels zum Eindicken durchgeführt wird.

13. Verfahren gemäß einem der Ansprüche 1 bis 12, wobei das Mahlen
▪ in einem Volumen Wasser oder wässriger Lösung von 3 bis 7 L/kg oder von 4 bis 5 L/kg Pflanze; oder
▪ in einem Volumen wässriger Lösung, umfassend ein Antioxidationsmittel, beispielsweise Natriumsulfit oder Natriumdisulfit, von 3 bis 7 L/kg oder von 4 bis 5 L/kg Pflanze durchgeführt wird.

14. Verfahren gemäß einem der Ansprüche 1 bis 13, wobei das Mahlen in Anwesenheit mindestens eines Tensids durchgeführt wird, ausgewählt aus
▪ einem anionischen Tensid, beispielsweise Natriumdodecylsulfat (SDS);
▪ einem kationischen Tensid, beispielsweise Trimethyltetradecylammoniumbromid (TTAB);
▪ einem nicht-ionischen Tensid, beispielsweise einem Polyethylensorbitester;
▪ einem zwitterionischen Tensid, beispielsweise einer N-alkylierten Aminosäure.

15. Verfahren gemäß einem der Ansprüche 1 bis 14, darüber hinaus umfassend
▪ vorheriges Schneiden der Pflanze, in feuchtem Medium, in wässriger Lösung oder in Wasser, in Stückchen mit einer Größe von 0,5 bis 100 mm oder 60 mm, vorzugsweise von 0,5 bis 50 mm oder von 1 bis 30 mm; oder
▪ vorheriges Schneiden der Pflanze, in feuchtem Medium, in wässriger Lösung oder in Wasser, in Stückchen mit einer Größe von 0,5 bis 50 mm, vorzugsweise von 1 bis 30 mm, anschließende Lagerung der Pflanzenstückchen, in feuchtem Medium, in wässriger Lösung oder in Wasser.

## Claims

1. Method for extracting polyisoprene having a weight-average molecular weight (Mw) higher than 800 000 g/mol, in the form of a dispersion in water, comprising:
▪ grinding, via rotary shearing using a device comprising at least one rotor and at least one stator or grinding at a pH higher than 3 and lower than 8, at least one plant, plant part or plant derivative selected from among guayule (*Parthenium argentatum*), spurge (*Euphorbia lathyris*), argan (*Argania spinosa*), mariola (*Parthenium incanum*), rubber rabbitbrush (*Chrysothamnus pinifolius*), showy milkweed (*Asclepias speciosa*), pale Indian plantain (*Cacalia atripikifolia*), rubber vine (*Cryptostegia grandiflora*), Russian dandelion (*Taraxacum koksaghyz*), scorzonera (*Scorzonera sp.*), hoary mountain mint (*Pycnanthemum incanum*), Canada germander (*Teucrieum canadense*) and Tall Bellflower *Campanula americana* in a volume of water or in an aqueous solution ranging from 1 to 15 L/kg of plant, into particles of size less than 1 mm;
▪ separating the solid residues.

2. The method according to claim 1, wherein grinding is performed at a pH higher than 3 and lower than 8, via shearing alone or shearing with flexion.

3. The method according to claim 1, wherein grinding is performed at a pH higher than 3 and lower than 11, or at a pH higher than 3 and lower than 8 via rotary shearing using a device comprising at least one rotor and one stator.

4. The method according to any of claims 1 to 3 subsequently comprising :
- concentration of the dispersion of polyisoprene in water (latex) and stabilisation of the polyisoprene in the form of a dispersion in water; or
- coagulation of the polyisoprene and separation of the rubber.

5. The method according to any of claims 1 to 4, wherein
- grinding leads to particles of size smaller than 500 µm, preferably smaller than 250 µm, more preferably smaller than 150 µm; or
- at least one step is performed in the presence of at least one agent selected from among a polyisoprene extracting agent, a polyisoprene stabilising agent, a polyisoprene concentrating agent; or
- comprising at least two additional steps of grinding and separation; or
- comprising a prior pre-treatment step of the harvested plant.

6. The method according to any of claims 1 to 5, wherein:
▪ the plant is guayule (*Parthenium argentatum*); or
▪ the whole plant is used; or
▪ the plant is previously pre-treated; or
▪ only the roots, branches and leaves of the plant are used; or
▪ only the branches and leaves of the plant are used; or
▪ only the branches of the plant are used; or
▪ only the leaves of the plant are used; or
▪ only the roots of the plant are used; or
▪ only the fruits of the plant are used; or
▪ only the woody biomass of the plant is used; or
▪ only the wood of the plant is used; or
▪ only the bark of the plant is used.

7. The method according to any of claims 1 to 6, wherein the extracted polyisoprene has a weight-average molecular weight (Mw) higher than 1 000 000 g/mol or higher than 2 000 000 g/mol or higher than 2 500 000 g/mol; preferably ranging from 800 000 to 3 000 000 g/mol or from 800 000 to 2 500 000 g/mol or from 800 000 to 2 000 000 g/mol or from 1 000 000 to 3 000 000 g/mol or from 1 000 000 to 2 500 000 g/mol or from 1 000 000 to 2 000 000 g/mol or from 1 500 000 to 3 000 000 g/mol or from 1 500 000 to 2 500 000 g/mol or from 2 000 000 to 2 500 000 g/mol or from 2 000 000 to 3 000 000 g/mol.

8. The method according to any of claims 1 to 7, wherein the weight-average molecular weight (Mw) of the extracted polyisoprene is 50 to 100%, preferably 55 to 100 %, preferably 60 to 95%, and more preferably 80 to 90 % of the value of the weight-average molecular weight (Mw) of the polyisoprene in the plant before extraction.

9. The method according to any of claims 1 to 8, wherein the polydispersity index of the extracted polyisoprene is lower than 3, preferably lower than 2 or lower than 1.6, or the polydispersity index of the extracted polyisoprene ranges from 1.6 to 3, or from 1.6 to 2, or from 1.8 to 3 or from 1.8 to 3.

10. The method according to any of claims 1 to 9, wherein the dispersion obtained of polyisoprene in water comprises 5 to 65 %, preferably 10 to 65%, preferably 15 to 65 %, preferably 25 to 65 %, preferably 30 to 65 %, more preferably 35 to 65% by weight of dry rubber content (DRC).

11. The method according to any of claims 1 to 10, wherein the extraction yield of polyisoprene having a weight-average molecular weight (Mw) higher than 800 000 g/mol is greater than 50 %, preferably greater than 60 %, more preferably greater than 70 % by weight of polyisoprene in the plant after harvesting.

12. The method according to any of claims 1 to 11, wherein:
- grinding is performed less than 6 months after harvesting, preferably less than 2 months after harvesting, more preferably less than one week after harvesting, further preferably less than one day after harvesting or less than 6 h after harvesting; or
- grinding is performed at a pH higher than 3 and lower than 7.8, or at a pH higher than 3 and lower than 7.5, or at a pH higher than 3 and lower than 7, or at a pH higher than 4 and lower than 7.8, or at a pH higher than 4 and lower than 7.5, or at a pH higher than 4 and lower than 7; or
- grinding is performed at a temperature lower than 60 °C, preferably lower than 50 °C, more preferably at a temperature lower than 40 °C; or
- grinding is performed after soaking the plant after harvesting in an aqueous solution comprising at least one agent selected from among a polyisoprene extracting agent, a polyisoprene stabilising agent, a polyisoprene concentrating agent; or
- separation is filtration, for example performed using at least one sieve, for example a 100 µm sieve; or
- concentration is obtained by mechanical centrifugation; or
- concentration is obtained by creaming; or
- concentration is obtained by mechanical centrifugation combined with creaming, or by mechanical centrifugation in the presence of at least one creaming agent.

13. The method according to one of claims 1 to 12, wherein grinding is conducted:
- in a volume of water or aqueous solution ranging from 3 to 7 L/kg or from 4 to 5 L/kg of plant; or
- in a volume of aqueous solution comprising an antioxidant e.g. sodium sulfite or sodium bisulfite, ranging from 3 to 7 L/kg or from 4 to 5 L/kg of plant.

14. The method according to one of claims 1 to 13, wherein grinding is performed in the presence of at least one surfactant selected from among:
▪ an anionic surfactant, e.g. sodium dodecyl sulfate (SDS);
▪ a cationic surfactant e.g. trimethyl tetradecylammonium bromide (TTAB);
▪ a non-ionic surfactant e.g. a polyethylene sorbitol ester;
▪ a zwitterionic surfactant e.g. an N-alkyl amino acid.

15. The method according to one of claims 1 to 14, also comprising:
▪ prior cutting of the plant in a wet medium, in an aqueous solution or in water, into pieces of size ranging from 0.5 to 100 mm or 60 mm, preferably ranging from 0.5 to 50 mm or from 1 to 30 mm; or
▪ prior cutting of the plant in a wet medium, in an aqueous solution or in water, into pieces of size ranging from 0.5 a 50 mm, preferably from 1 to 30 mm, followed by storage of the plant pieces in a wet medium, in an aqueous solution or in water.
